# EUROPÄISCHE PATENTSCHRIFT

(11) **EP 3 463 969 B1**
(45) Veröffentlichungstag und Bekanntmachung des Hinweises auf die Patenterteilung: **22.12.2021**
(21) Anmeldenummer: 17742364.7
(22) Anmeldetag: 30.05.2017
(51) Int. Cl.: H01R 4/72, H01R 13/66, B60L 50/60

(54) **STECKER, INSBESONDERE MIT EINEM FAHRZEUGLADEKABEL EINES ELEKTRO- ODER HYBRIDFAHRZEUGES**
PLUG, PARTICULARLY WITH A VEHICLE POWER CABLE OF AN ELECTRIC OR HYBRID VEHICLE
FICHE, EN PARTICULIER AVEC UN CÂBLE DE RECHARGE D'UN VÉHICULE ÉLECTRIQUE OU HYBRIDE

(30) Priorität: 07.06.2016 DE 202016103030 U
(43) Veröffentlichungstag der Anmeldung: 10.04.2019
(73) Patentinhaber: Müller Plastik GmbH, 51688 Wipperfürth (DE)
(72) Erfinder: MÜLLER, Michael, 51688 Wipperfürth (DE); KÖSTER, Manuel, 51688 Wipperfürth (DE)
(74) Vertreter: Borbach, Markus
(86) Internationale Anmeldenummer: PCT/DE2017/100460
(87) Internationale Veröffentlichungsnummer: WO 2017/211349

(56) Entgegenhaltungen:
- EP-A1- 2 991 082
- WO-A1-2017/137826
- DE-A1-102006 052 039
- DE-A1-102014 111 831

## Beschreibung

### Technisches Geblet

Die Erfindung betrifft einen Stecker nach dem Oberbegriff des Anspruches 1.

Bei Elektro- oder Hybridfahrzeugen wird die Batterie über ein Ladekabel geladen. Das Ladekabel ist mit einem Netzstecker versehen. Der Netzstecker kann an eine Haushaltssteckdose angeschlossen werden.

Der Ladestrom wird häufig in Abhängigkeit einer Temperatur der Steckkontakte geregelt. Hierbei werden Temperatursensoren eingesetzt.

Bekannte Laderegelungen durch Temperatursensoren haben oft den Nachteil, dass sie relativ träge sind. So kann es bis zu 20 Minuten dauern, bis ein Temperatur-Ist-Wert erfasst wird.

Auch müssen am Stecker Änderungen vorgenommen werden, um die Temperatursensoren in diesem zu integrieren.

### Stand der Technik

Aus der DE 10 2010 014 024 A1 ist ein Stecker der gattungsgemäßen Art bekannt, in dem ein Temperatursensor bzw. ein PTC- oder NTC-Sensor

integriert ist. Der Sensor ist so positioniert, dass er eine Temperatur nahe einer Verbindung zwischen den Kontaktsteckern und den Buchsen erfasst. Der Temperatursensor kann in einem Gehäuse im Spritzguss umspritzt sein.

### Aufgabe der Erfindung und Lösung

Der Erfindung liegt die Aufgabe zugrunde, einen Stecker der gattungsgemäßen Art zu schaffen, der eine schnelle Laderegelung unter bei geringen Herstellungskosten erlaubt.

WO 2017/137826 A1 offenbart einen Ladestecker für eine Fahrzeugbatterie. Dieser Ladestecker weist einen Sensor auf, der mit einem Schrumpfschlauch befestigt wird. Die Offenlegungsschrift DE 10 2014 111 831 A1 offenbart ein Steckverbinderteil mit Temperatursensoren. Dieses umfasst mehrere elektrische Kontaktelemente zum Führen von elektrischem Strom und mehrere Temperatursensoren, von denen jeder an einem zugeordneten Kontaktelement angeordnet ist. Das europäische Patent EP 2 991 082 B1 offenbart einen umspritzten Stecker in Schichtbauweise für Elektroautos, welcher mit wenigstens einem Temperatursensor ausgestattet ist. Die Offenlegungsschrift DE 10 2006 052 039 A1 offenbart einen Schaltschrank mit Temperaturüberwachung. Der Schaltschrank umfasst eine Schaltanlage mit mehreren Leitern und elektrisch verbundenen Modulen. Den Modulen können Temperatursensoren zugeordnet werden.

Diese Aufgabe wird durch einen Stecker mit dem im kennzeichnenden Teil des Anspruches 1 angegebenen Merkmale in Verbindung mit seinen Oberbegriffsmerkmalen gelöst.

### Vorteile der Erfindung

Die Erfindung beruht auf den Gedanken, den Temperatursensor direkt mit dem Stecker thermisch und mechanisch zu verbinden, um eine schnelle Temperaturerfassung zu ermöglichen. Dabei können handelsübliche Sensorelemente verwendet werden.

Die Erfindung ist besonders vorteilhaft für Stecker, die mit einem Ladekabel und zwar mit einem Fahrzeugladekabel eines Elektro- oder Hybridfahrzeuges verbunden sind. Der Stecker hat ein Steckergehäuse sowie spannungsführende Stromkontakte für einen Ladestrom. Der Ladestrom lädt eine Batterie des Elektro- oder Hybridfahrzeuges. Im Steckergehäuse ist mindestens ein Temperatursensor für eine Laderegelung und/oder eine Ladeüberwachung angeordnet.

Der nach der Erfindung verwendete Temperatursensor ist ein handelüblicher Sensor, der aus einem Sensorkopf und Sensoranschlussbeinen besteht. Der Sensorkopf kann in etwa eine Kugelform aufweisen.

Der Sensorkopf steht in vorteilhafter Weise im direkten Kontakt mit einem Bereich eines der spannungsführenden Steckkontakte. Dadurch ist eine sehr schnelle Wärmeübertragung möglich. So kann es nur wenige Minuten dauern, bis ein Temperatur-Ist-Wert erfasst wird.

Die Anschlussbeine sind parallel zum spannungsführenden Steckkontakt angeordnet. Dadurch ist eine platzsparende Sensoranordnung möglich.

Der Sensorkopf wird erfindungsgemäß durch einen Schrumpfschlauch in dem Bereich eines der spannungsführenden Steckkontakte gehalten und gegen den Bereich eines der spannungsführenden Steckkontakte gedrückt.

Der Sensorkopf wird mit einer geeigneten Kraft durch den Schrumpfungsprozess des Schrumpfschlauches gegen den spannungsführenden Steckkontakt gedrückt. Dadurch entsteht ohne das Erfordernis von Wärmeleitpaste ein guter Wärmekontakt zwischen Sensorkopf und spannungsführenden Steckkontakt.

Der Schrumpfschlauch umgibt den Bereich des Steckkontaktes und den Sensorkopfes vollständig, so dass einerseits der Temperatursensor wärmeleittechnisch und mechanisch mit dem Steckkontakt durch den Schrumpfschlauch verbunden ist und der Temperatursensor andererseits in einer Art Wärmekammer, die durch den Schrumpfschlauch gebildet wird, angeordnet ist. Der Schrumpfschlauch wirkt wie ein thermischer Isolator, was eine schnelle Ist-Wert-Erfassung ermöglicht.

Der erfindungsgemäße Stecker hat den Vorteil, dass einerseits keine Änderungen am Gehäuse des Steckers vorgenommen werden müssen und andererseits handelsübliche Sensoren ohne zusätzliche Elemente verwendet werden können.

Außerdem wird durch die Erfindung eine ausreichende elektrische Isolation berücksichtigt. Im Stecker integrierte Sensoren müssen nämlich Normen erfüllen, die sicherstellen, dass zwischen den Netzspannung führenden Teilen und den Sensorleitungen eine ausreichende elektrische Isolation vorhanden ist.

Die Erfindung beruht auf der Erkenntnis, dass zur Laderegelung bzw. Ladeüberwachung eine Temperatur der Kontakte eines Steckers dient. Je höher der Ladestrom ist, desto höher ist die Temperatur der Steckkontakte.

Bei hohen Stromlasten bzw. hohen Ladeströmen erwärmen sich die Kontakte des Steckers. Der Gedanke ist, im nahen Bereich der Verbindung zwischen Kabel und Stecker die Temperatur durch einen erfindungsgemäßen Sensor zu überwachen.

Durch den schnellen und effizienten Temperatur-Übertrag ist eine Regelung der Leistung bzw. des Stromes um ein vielfaches schneller als bekannte Lösungen.

Als Temperatursensor kann jedes Bauteil eingesetzt werden, das zum Beispiel seinen Widerstand in Abhängigkeit der Temperatur verändert.

Beispielsweise können Heißletter (NTC) verwendet werden. Diese verringern ihren Widerstand bei Temperaturerhöhung. Sie basieren auf Metalloxiden oder Halbleitern, Ein solches Bauteil wird auch Thermistor genannt.

Einsetzbar sind auch Kaltleiter (PTC). Diese erhöhen ihren Widerstand bei Temperaturerhöhung.

Zum Beispiel ist ein Sensor vom Typ NTCALUG01A von Vishay verwendet werden.

Verwendbar sind auch Platin-Messwiderstände. Diese haben einen nahezu temperaturlinearen Widerstandsverlauf. Sie können für Temperaturen zwischen -200 °C und +850 °C eingesetzt werden.

Denkbar ist auch die Anordnung von Silizium-Messwiderständen. Diese können im Temperaturbereich von -50 °C bis +150 °C eingesetzt werden.

Grundsätzlich kann auch ein Keramik-Kaltleiter eingesetzt werden. Dieser weist bei einer materialspezifischen Temperatur einen starken Widerstandsanstieg auf.

Als Temperatursensor können auch andere Bauteile verwendet werden, die direkt ein bearbeitbares elektrisches Signal liefern. Beispielsweise können integrierte Halbleiter-Temperatursensoren bzw. Festkörperschaltkreise genutzt werden, die einen zu ihrer Temperatur proportionalen Strom liefern.

Alternativ kann auch ein Wärmefühler mit Schwingquarz als Messelement eingesetzt werden. Die Resonanzfrequenz des schwingenden Quarzes verändert sich abhängig von der Temperatur und kann sehr präzise gemessen werden.

Stattdessen können genauso gut Thermoelemente verbaut werden. Diese wandeln eine Temperaturdifferenz durch den sogenannten Seebeck-Effekt in eine elektrische Spannung um.

Nicht auszuschließen sind pyroelektrische Materialien. Diese ändern die Ladungsträgerdichte an ihrer Oberfläche bei Temperaturschwankungen durch Veränderung der spontanen Polarisation.

In Frage kommen auch sogenannte Curie-Effekt-Temperatursensoren. Diese bestehen aus einem Dauermagneten, der unterhalb der Curie-Temperatur an ferromagnetischem Material haftet und oberhalb dieser Temperatur abfällt und dabei einen Schalter betätigt.

Grundsätzlich ist die Verwendung von faseroptischen Temperatursensoren möglich. Sie beruhen auf dem sogenannten Raman-Effekt oder der temperaturabhängigen Änderung des Brechungsindex in Faser-Bragg-Gitter-Sensoren (FBGS).

Es ist also eine Vielzahl von Temperatursensoren bzw. Wärmefühler, Temperaturfühler, Wärmesensoren und dergleichen möglich.

### Vorteilhafte Ausführungsformen der Erfindung und weitere Vorteile

Weitere vorteilhafte Ausgestaltungen der Erfindung sind in den Unteransprüchen gekennzeichnet.

In einer vorteilhaften Weiterbildung des erfindungsgemäßen Steckers ist vorgesehen, dass der Schrumpfschlauch so lang ist, dass der Sensorkopf und die Sensoranschlussbeine in dem Schrumpfschlauch angeordnet sind. Dadurch wird einerseits der Sensorkopf gegen den Kontakt gedrückt, so dass ein guter Wärmekontakt entsteht, und andererseits die Anschlussbeine elektrisch isoliert und mechanisch geschützt.

In dem erfindungsgemässen Stecker ist vorgesehen, dass die Sensoranschlussbeine mit Sensorsignalleitungen direkt verlötet sind. Dadurch ist eine platzsparende Anordnung möglich. Damit die Anschlussbeine des Sensors zusätzlich elektrisch isoliert sind, sowohl gegenseitig als auch gegenüber dem spannungsführenden Stecker ist weiterhin vorgesehen, dass jedes Sensoranschlussbein mit einem weiteren, dünneren Schrumpfschlauch elektrisch isoliert ist, so dass zwei dünne Schrumpfschläuche und ein dickerer Schrumpfschlauch vorhanden sind und die dünneren Schrumpfschläuche im Wesentlichen in dem dickeren Schrumpfschlauch angeordnet sind.

Damit Isolierstecken und Normen eingehalten werden können, ist es vorteilhaft, wenn die dünneren Schrumpfschläuche aus dem dickeren Schrumpfschlauch ein Stück herausragen.

Bei einer vorteilhaften Ausführung der Erfindung sind insgesamt zwei Temperatursensoren angeordnet, wobei jeweils ein Temperatursensor einem Steckkontakt zugeordnet ist. Dadurch werden Abweichungen bei unterschiedlichen Kontaktkräften der Steckkontakte kompensiert und so die Messgenauigkeit erhöht.

Eine andere vorteilhafte Ausführung der Erfindung ist dadurch gekennzeichnet, dass beide Temperatursensoren in Reihe geschaltet sind. Aus dem Reihewiderstand kann eine genauere Messung und eine einfache Auswertung erreicht werden.

Um eine Qualitätskontrolle zu erleichtern und die Sensorposition überprüfen zu können Ist es von Vorteil, wenn jeder Schrumpfschlauch aus einem transparenten Material besteht.

Bei einer anderen vorteilhaften Ausführung der Erfindung ist der Sensor als Thermoelement, insbesondere als NTC-Thermistor ausgeführt ist. Dieser erlaubt eine genaue Messung bei geringen Kosten.

Für Elektroautos wird bevorzugter Weise ein genormter Netzstecker für ein Wechselspannungsstromnetz eingesetzt.

Für Elektroautos wird bevorzugter Weise ein genormter Netzstecker für ein Wechselspannungsstromnetz eingesetzt.

### Ausführungsbeispiel

Ein Ausführungsbeispiel wird anhand der Zeichnungen näher erläutert, wobei weitere vorteilhafte Weiterbildungen der Erfindung und Vorteile derselben beschrieben sind.

Es zeigen:
- Fig. 1: eine erste schematische Darstellung einer Ausführungsform des erfindungsgemäßen Steckers von der Seite gesehen,
- Fig. 2: eine zweite schematische Darstellung des erfindungsgemäßen Steckers von oben gesehen,
- Fig. 3: eine dritte schematische Darstellung des erfindungsgemäßen Steckers von einer Stirnseite gesehen, und
- Fig. 4: eine perspektivische Darstellung des erfindungsgemäßen Steckers,

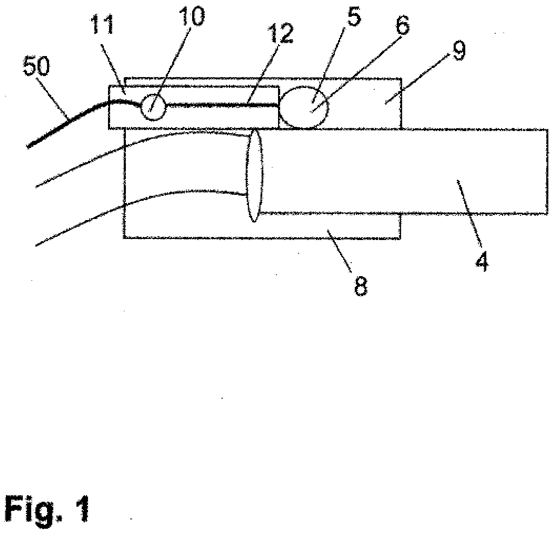

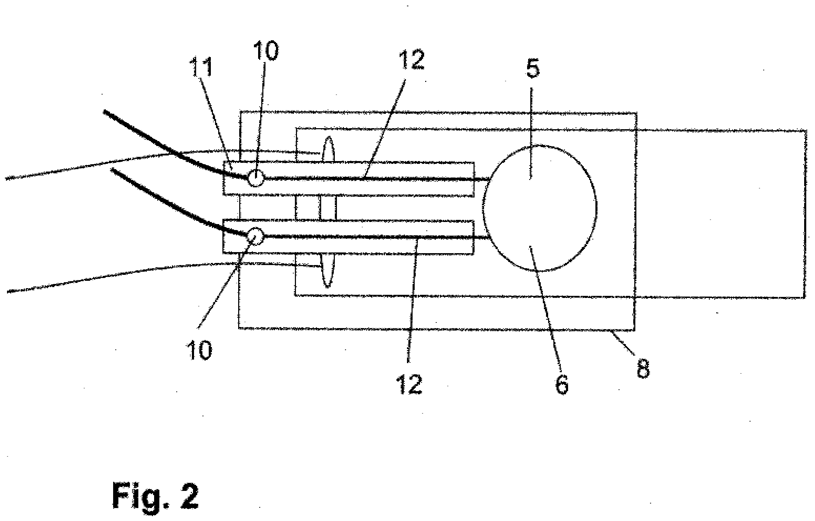

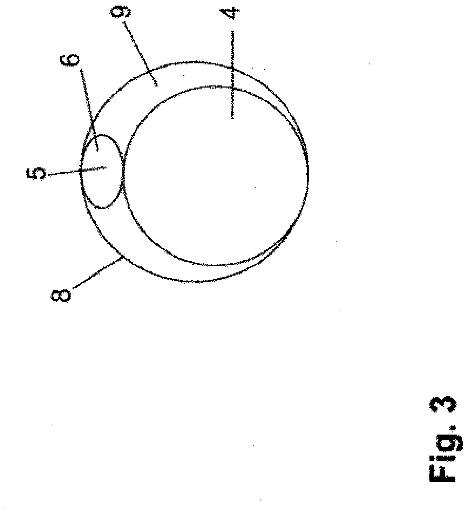

Fig. 1 zeigt einen Steckkontakt 4 eines Steckers zur Verwendung in einem deutschen Stromnetz. An dem Steckkontakt 4 ist ein Temperatursensor 5 angeordnet. Die Figuren 2 und 3 zeigen den Temperatursensor 5 aus verschiedenen Ansichten.

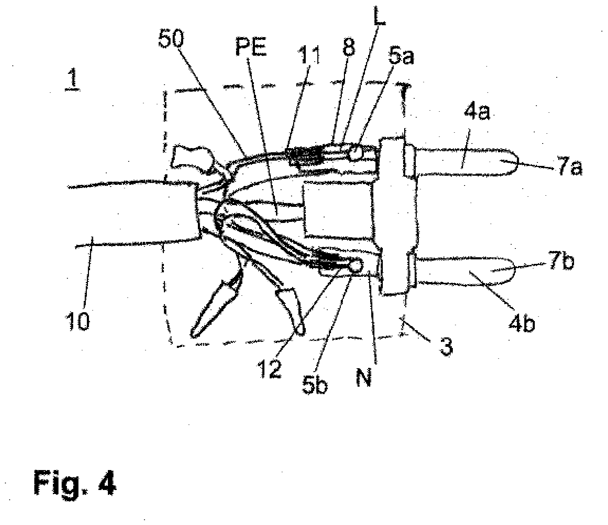

Der in Fig. 4 näher gezeigte Stecker 1 ist mit einem Fahrzeugladekabel eines Elektro- oder Hybridfahrzeuges verbunden. Die Stromkontakte 4 bzw. 4a, 4b sind Steckkontakte 7a, 7b. Die beiden Steckkontakte 7a, 7b sind in Fig. 4 gekennzeichnet. Der Stecker 1 weist ein Steckergehäuse 3 sowie die spannungsführende Stromkontakte 4a, 4b für einen Ladestrom einer Batterie des Elektro- oder Hybridfahrzeuges auf. Im Steckergehäuse 3 sind zwei Temperatursensoren 5a, 5b für eine Laderegelung vorgesehen. Anstelle einer Regelung ist auch eine zusätzliche Strom- bzw. Temperaturüberwachung denkbar, wobei die eigentliche Laderegelung durch ein externes Ist-Erfassungselement erfolgen könnte. Die Begriffe Regelung und Überwachung umfassen hier auch andere Begriffe, wie Steuerung, Schutzmaßnahmen und dergleichen und sind hier weit auszulegen.

Mit den Sensoren 5a, 5b verbundene Steuerleitungen bzw. Signalleitungen 50, die in den Figuren gezeigt sind, werden im Ladekabel geführt.

Der Stecker 1 ist als dreipoliger Stecker für einen Leiter L, einen Neutralleiter N und einen Schutzleiter PE ausgelegt. Dieser kann als dreipoliger Schukostecker nach deutscher Norm mit zwei seitlichen bzw. gegenüberliegenden PE-Kontakten und zwei vorderen Steckkontakten 7a, 7b konzipiert sein. Dieser kann aber auch als dreipoliger Stecker 1 für eine andere Ländernorm mit drei vorderen Steckkontakten ausgeführt sein (hier nicht gezeigt).

Die Figuren veranschaulichen also einen Stecker 1, der mit einem Ladekabel, insbesondere mit einem Fahrzeugladekabel eines Elektro- oder Hybridfahrzeuges verbunden ist, und ein Steckergehäuse 3, sowie spannungsführende Stromkontakte 4a, 4b für einen Ladestrom, insbesondere einer Batterie des Elektro- oder Hybridfahrzeuges, umfasst, wobei im Steckergehäuse 3 mindestens ein Temperatursensor 5a, 5b für eine Laderegelung und/oder eine Ladeüberwachung angeordnet ist.

Jeder Temperatursensor 5a, 5b besteht aus einem Sensorkopf 6 und Sensoranschlussbeinen 12. Der Sensorkopf 6 steht im direkten Kontakt mit einem Bereich eines der spannungsführenden Steckkontakte 4a, 4b. Die Anschlussbeine 12 sind parallel zum spannungsführenden Steckkontakt 4a, 4b angeordnet. Der Sensorkopf 6 wird durch einen Schrumpfschlauch 8 in dem Bereich des entsprechenden spannungsführenden Steckkontaktes 4a bzw. 4b gehalten, wie die Figuren zeigen. Der Sensorkopf 6 wird außerdem gegen den Bereich des spannungsführenden Steckkontaktes 7a, 7b gedrückt, indem ein Schrumpfungsprozess stattfindet. Der Schrumpfungsprozess erfolgt durch Wärmeeinwirkung. Durch die Wärmeeinwirkung verringert sich der Durchmesser des Schrumpfschlauches 8. Der Schrumpfschlauch 8 umgibt vollständig den Bereich des Steckkontaktes 7a bzw. 7b und den Sensorkopfes 6, so dass der Temperatursensor 5 einerseits wärmeleittechnisch und mechanisch mit dem Steckkontakt 7a, 7b durch den Schrumpfschlauch verbunden ist und der Temperatursensor 5 andererseits in einer Art Wärmekammer 9, die durch den Schrumpfschlauch 8 gebildet wird, angeordnet ist.

Wie die Figuren 1 und 2 zeigen, ist der Schrumpfschlauch 8 so lang, dass der Sensorkopf 6 und die Sensoranschlussbeine 12 in dem Schrumpfschlauch 8 im Wesentlichen angeordnet sind. Hierbei ragen die Anschlussbeine 12 leicht aus dem Schrumpfschlauch 8 heraus.

Die Sensoranschlussbeine 12 sind mit den Sensorsignalleitungen 50 direkt verlötet. Die Lötverbindungen 10 sind in den Figuren 1 und 2 gekennzeichnet.

Wie außerdem die Figuren 1 und 2 zeigen, ist jedes Sensoranschlussbein 12 mit einem weiteren, dünneren Schrumpfschlauch 11 elektrisch isoliert. Somit sind zwei dünne Schrumpfschläuche 11 und ein dickerer Schrumpfschlauch 8 vorhanden. Die dünneren Schrumpfschläuche 11 sind im Wesentlichen in dem dickeren Schrumpfschlauch 8 angeordnet.

Wie die Fig. 4 zeigt, sind insgesamt zwei Temperatursensoren 5a, 5b angeordnet sind, wobei jeweils der Temperatursensor 5a dem Steckkontakt 7a und der Temperatursensor 5b dem Steckkontakt 7b zugeordnet ist. Beide Temperatursensoren 5a, 5b sind elektrisch In Reihe geschaltet.

Jeder Schrumpfschlauch 11 besteht einem transparenten Material. Der Durchmesser des Schrumpfschlauches 11 beträgt im ungeschrumpften Zustand etwa 4 bis 8 mm. Der Durchmesser schrumpft um etwa 20% bis 50%. Jeder der Sensoren 5a, 5b ist als Thermoelement, insbesondere als NTC-Thermistor ausgeführt.

Der Stecker 1 ist ein genormter Netzstecker für ein Wechselspannungsstromnetz.

Zwar ist der Stecker ein genormter Netzstecker für ein Wechselspannungsstromnetz, jedoch kann auch ein anderer Steckertyp bzw. eine andere Ladespannung verwendet werden, die geeignet ist die Batterie des Elektroautos zu laden.

Die Erfindung ist also nicht auf das Beispiel nach den Figuren beschränkt. So können z.B. andere Sensoren, wie PTC- Sensoren, verwendet werden.

### Bezugszeichen liste

- 1: Stecker
- 2: Fahrzeugladekabel
- 3: Steckergehäuse
- 4a: Stromkontakt
- 4b: Stromkontakt
- 5a: Temperatursensor
- 5b: Temperatursensor
- 6: Sensorkopf
- 7a: Steckkontakt
- 7b: Steckkontakt
- 8: Schrumpfschlauch
- 9: Wärmekammer
- 10: Lötverbindungen
- 11: Schrumpfschlauch
- 12: Sensoranschlussbeine
- 50: Signalleitungen

## Patentansprüche

1. Stecker (1), der mit einem Ladekabel, insbesondere mit einem Fahrzeugladekabel eines Elektro- oder Hybridfahrzeuges verbindbar ist, und ein Steckergehäuse (3), sowie spannungsführende Stromkontakte (4a, 4b) für einen Ladestrom, insbesondere einer Batterie des Elektro- oder Hybridfahrzeuges, umfasst, wobei im Steckergehäuse (3) mindestens ein Temperatursensor (5a, 5b) für eine Laderegelung und/oder eine Ladeüberwachung angeordnet ist, wobei der Temperatursensor (5a, 5b) aus einem Sensorkopf (6) und Sensoranschlussbeinen (12) besteht, wobei ferner Sensorsignalleitungen (50) vorgesehen sind und der Sensorkopf (6) im direktem Kontakt mit einem Bereich eines spannungsführenden Steckkontaktes (7a, 7b) steht und die Anschlussbeine (12) parallel zum spannungsführenden Steckkontakt (7a, 7b) angeordnet sind, und dass der Sensorkopf (6) durch einen Schrumpfschlauch (8) in dem Bereich des entsprechenden spannungsführenden Steckkontaktes (7a, 7b) gehalten wird und gegen den Bereich des spannungsführenden Steckkontaktes (7a, 7b) gedrückt wird, indem ein Schrumpfungsprozess stattfindet, wobei der Schrumpfschlauch (8) den Bereich des Steckkontaktes (7a, 7b) und den Sensorkopfes (6) vollständig umgibt, so dass der Temperatursensor (5a, 5b) einerseits wärmeleittechnisch und mechanisch mit dem Steckkontakt (7a, 7b) durch den Schrumpfschlauch (8) verbunden ist und der Temperatursensor (5a, 5b) andererseits in einer Art Wärmekammer (9), die durch den Schrumpfschlauch (8) gebildet wird, angeordnet ist **dadurch gekennzeichnet, dass** die Sensoranschlussbeine (12) mit Sensorsignalleitungen (50) direkt verlötet sind und jedes Sensoranschlussbein mit einem weiteren, dünneren Schrumpfschlauch (11) elektrisch isoliert ist, sodass zwei dünne Schrumpfschläuche (11) und ein dickerer Schrumpfschlauch (8) vorhanden sind und die dünneren Schrumpfschläuche (11) im Wesentlichen in dem dickeren Schrumpfschlauch (8) angeordnet sind.

2. Stecker nach Anspruch 1, **dadurch gekennzeichnet, dass** der Schrumpfschlauch so lang ist, dass der Sensorkopf (6) und die Sensoranschlussbeine (12) in dem Schrumpfschlauch angeordnet sind.

3. Stecker nach Anspruch 1, **dadurch gekennzeichnet, dass** die dünneren Schrumpfschläuche (8) aus dem dickerem Schrumpfschlauch (11) ein Stück herausragen.

4. Stecker nach einem der vorhergehenden Ansprüche, **dadurch gekennzeichnet, dass** insgesamt zwei Temperatursensoren (5a, 5b) angeordnet sind, wobei jeweils ein Temperatursensor (5a, 5b) einem Steckkontakt (7a, 7b) zugeordnet ist.

5. Stecker nach Anspruch 4, **dadurch gekennzeichnet, dass** beide Temperatursensoren (5a, 5b) in Reihe geschaltet sind.

6. Stecker nach einem der vorhergehenden Ansprüche, **dadurch gekennzeichnet, dass** jeder Schrumpfschlauch (8) aus einem transparenten Material besteht.

7. Stecker nach einem der vorhergehenden Ansprüche, **dadurch gekennzeichnet, dass** der Sensor (5a, 5b) als Thermoelement, insbesondere als NTC-Thermistor ausgeführt ist.

8. Stecker nach einem der vorhergehenden Ansprüche, **gekennzeichnet durch** eine Ausführung als genormter Netzstecker für ein Wechselspannungsstromnetz.

## Claims

1. Charging plug (1) which is connected to a charging cable, in particular to a vehicle charging cable of an electric or hybrid vehicle, and comprises a plug housing (3), as well as voltage-carrying current contacts (4a, 4b) for a charging current, in particular of a battery of the electric or hybrid vehicle, at least one temperature sensor (5a, 5b) for charging control and/or charging monitoring being arranged in the plug housing (3), the temperature sensor (5a, 5b) consists of a sensor head (6) and sensor connection legs (12), sensor signal lines (50) also being provided and the sensor head (6) being in direct contact with a region of a voltage-carrying plug contact (7a, 7b) and the connection legs (12) being arranged parallel to the voltage-carrying plug contact (7a, 7b), and in that the sensor head (6) is held in the region of the corresponding voltage-carrying plug contact (7a, 7b) by a shrink tubing (8) and is connected to the voltage-carrying plug contact (7a, 7b) by means of the sensor connection legs (12), 7b) and is pressed against the region of the voltage-carrying plug contact (7a, 7b) by a shrinkage process, wherein the shrink tubing (8) completely surrounds the region of the plug contact (7a, 7b) and the sensor head (6), so that the temperature sensor (5a, 5b) on the one hand is thermally and mechanically connected to the plug contact (7a, 7b) by the shrink tubing (8) and the temperature sensor (5a, 5b) on the other hand in a kind of heat chamber (9), formed by the shrink tubing (8), **characterised in that** the sensor connecting legs (12) are directly soldered to sensor signal lines (50) and each sensor connecting leg is electrically insulated with a further, thinner shrink tubing (11), so that two thin shrink tubings (11) and one thicker shrink tubing (8) are present and the thinner shrink tubings (11) are substantially arranged in the thicker shrink tubing (8).

2. Charging plug (1) according to claim 1, **characterised in that** the shrink tubing is so long that the sensor head (6) and the sensor connection legs (12) are arranged in the shrink tubing.

3. Charging plug (1) according to claim 1, **characterised in that** the thinner shrink tubing (8) protrudes a little from the thicker shrink tubing (11).

4. Charging plug (1) according to one of the preceding claims, **characterised in that** a total of two temperature sensors (5a, 5b) are arranged, one temperature sensor (5a, 5b) in each case being assigned to a plug contact (7a, 7b).

5. Charging plug (1) according to claim 4, **characterised in that** both temperature sensors (5a, 5b) are connected in series.

6. Charging plug (1) according to one of the preceding claims, **characterised in that** each shrink tubing (8) consists of a transparent material.

7. Charging plug (1) according to one of the preceding claims, **characterized in that** the sensor (5a, 5b) is designed as a thermocouple, in particular as an NTC thermistor.

8. Charging plug (1) according to one of the preceding claims, **characterised by** a design as a standardised mains plug for an AC mains supply.

## Revendications

1. Fiche (1), qui est reliée à un câble de charge, en particulier à un câble de charge de véhicule d'un véhicule électrique ou hybride, et qui comprend un boîtier de fiche (3), ainsi que des contacts de courant (4a, 4b) conducteurs de tension pour un courant de charge, en particulier d'une batterie du véhicule électrique ou hybride, au moins un capteur de température (5a, 5b) étant disposé dans le boîtier de fiche (3) pour la commande et/ou la surveillance de la charge, le capteur de température (5a, 5b) se compose d'une tête de capteur (6) et de branches de connexion de capteur (12), des lignes de signaux de capteur (50) étant également prévues et la tête de capteur (6) étant en contact direct avec une zone d'un contact de fiche conducteur de tension (7a, 7b) et les branches de connexion (12) étant disposées parallèlement au contact de fiche conducteur de tension (7a, 7b), et en ce que la tête de capteur (6) est maintenue dans la zone du contact de fiche conducteur de tension correspondant (7a, 7b) par un tube thermorétractable (8) et est pressée contre la zone du contact de fiche conducteur de tension (7a, 7b) et est pressé contre la zone du contact à fiche (7a, 7b) conducteur de tension par un processus de rétraction, le tube thermorétractable (8) entourant complètement la zone du contact à fiche (7a, 7b) et la tête de capteur (6), de sorte que le capteur de température (5a, 5b) d'une part est relié thermiquement et mécaniquement au contact à fiches (7a, 7b) par le tube thermorétractable (8) et le capteur de température (5a, 5b) d'autre part dans une sorte de chambre thermique (9), qui est formé par le tube thermorétractable (8), **caractérisé en ce que** les branches de connexion de capteur (12) sont directement soudées à des lignes de signaux de capteur (50) et chaque branche de connexion de capteur est isolée électriquement avec un autre tube thermorétractable plus mince (11), de sorte que deux tube thermorétractable minces (11) et un tube thermorétractable plus épaisse (8) sont présentes et les tubes thermorétractables plus minces (11) sont essentiellement disposées dans le tube thermorétractable plus épaisse (8).

2. Fiche (1) selon la revendication 1, **caractérisé en ce que** le tube thermorétractable est si longue que la tête de capteur (6) et les pattes de connexion de capteur (12) sont disposées dans le tube thermorétractable.

3. Fiche (1) selon la revendication 1, **caractérisé en ce que** le tube thermorétractable plus mince (8) fait légèrement saillie de le tube thermorétractable plus épaisse (11).

4. Fiche (1) selon l'une des revendications précédentes, **caractérisé en ce que** deux capteurs de température (5a, 5b) sont disposés au total, un capteur de température (5a, 5b) étant associé à chaque fois à un contact de bouchon (7a, 7b).

5. Fiche (1) selon la revendication 4, **caractérisé en ce que** les deux capteurs de température (5a, 5b) sont connectés en série.

6. Fiche (1) selon l'une des revendications précédentes, **caractérisé en ce que** chaque tube thermorétractable (8) est constitué d'un matériau transparent.

7. Fiche (1) selon l'une des revendications précédentes, **caractérisé en ce que** le capteur (5a, 5b) est conçu comme un thermocouple, en particulier comme une thermistance NTC.

8. Fiche (1) selon l'une des revendications précédentes, **caractérisée par** une conception en tant que fiche secteur normalisée pour une alimentation secteur en courant alternatif.
